# EUROPEAN PATENT SPECIFICATION

(11) **EP 4 450 444 B1**
(45) Date of publication and mention of the grant of the patent: **22.07.2026**
(21) Application number: 23168487.9
(22) Date of filing: 18.04.2023
(51) Int. Cl.: B66B 7/12

(54) **A METHOD AND A MONITORING ARRANGEMENT**
VERFAHREN UND ÜBERWACHUNGSANORDNUNG
PROCÉDÉ ET AGENCEMENT DE SURVEILLANCE

(43) Date of publication of application: 23.10.2024
(73) Proprietor: KONE Corporation, 00330 Helsinki (FI)
(72) Inventor: Helenius, Juha, 00330 Helsinki (FI); Wenlin, Henri, 00330 Helsinki (FI); Kastinen, Markus, 00330 Helsinki (FI); Partanen, Mikael, 00330 Helsinki (FI); Stenberg, Joni, 00330 Helsinki (FI); Fahad, Khan Muhammad, 00330 Helsinki (FI); Haq, Zuhair ul, 00330 Helsinki (FI); Lemström, Guy, 00330 Helsinki (FI)
(74) Representative: LEITZINGER OY

(56) References cited:
- JP-A- 2009 057 126
- US-A1- 2013 119 256

## Description

### Field of the invention

The invention relates to monitoring a roping of an elevator arrangement. The elevator arrangement is an elevator arrangement suitable for transporting passengers and/or goods.

### Background of the invention

Elevator arrangement for transporting passengers and/or goods typically comprises a roping comprising plurality of ropes. The roping is typically connected to an elevator car and a counterweight.

Each rope typically comprises one or more load bearing members that are elongated in the longitudinal direction of the rope and each form a structure that continues unbroken throughout the length of the rope. Load bearing members are the members of the rope which are able to bear together the load exerted on the rope in its longitudinal direction. The load, such as a weight suspended by the rope, causes tension on the load bearing member in the longitudinal direction of the rope, which tension can be transmitted by the load bearing member in question all the way from one end of the rope to the other end of the rope. Ropes may further comprise non-bearing components, such as an elastic coating, which cannot transmit tension in the above described way.

The conventional elevator ropes are round in cross section. In prior art, also belt-like ropes are known. In such ropes, the load bearing members are usually embedded in a polymer coating, such as rubber or polyurethane coating, forming the surface of the hoisting rope. In the belt-shaped solutions, the load bearing members are most commonly cords made of steel wires twisted together or alternatively elongated composite members made of composite material.

For the sake of safety, it's essential that the condition of the ropes of an elevator arrangement are monitored reliably. In addition, so as to minimize elevator downtime, it's preferred that poor rope condition can be detected early so that corrective actions (ordering of replacement ropes etc.) can be taken on time. The condition monitoring may comprise monitoring condition of any of multiple components of the rope. Also, the lateral positions of the ropes can be monitored. If a rope is positioned incorrectly, this may indicate incorrect operation of the rope(s) which may be due to an internal flaw of the rope in question. Incorrect position can also be due to incorrect operation of some other components of the elevator arrangement, such as a rope wheel for instance.

The traditional method for rope condition monitoring of steel wire ropes is visual detection of wire breaks. However, this method cannot be effectively utilized with all ropes. An alternative solution has been proposed in US2014182975A1 wherein condition monitoring is performed by monitoring electrical parameters, and in particular resistance, of the fiber reinforced load bearing members.

A challenge in condition monitoring has been the difficulties in noticing rope deterioration early in advance. Most damages occur without prior warnings, which may cause severe problems. Also, some damages are difficult to notice. Such damages include particularly delamination of a composite load bearing member or some local damages which may occur already during installation. A challenge has also been that the position of damage is difficult to find, particularly with methods monitoring electrical parameters of the ropes cannot indicate the location of rope damage.

A method for condition monitoring has also been disclosed in document EP3135621B1. In this document rope lateral position data is collected. A contactless sensing has been proposed, such as a camera surveillance or light curtain has been proposed. However, even better solution would be valuable which could detect more accurately condition of the rope and detect multiple aspects of rope condition.

Related prior solutions have also been disclosed in documents US 20130119256 A1 and JP 2009057126 A. These solutions are for detecting deformation of a twisted part of a rope, in particular for detecting if a wire end protrudes from the twisted part of the rope.

### Brief description of the invention

The object of the invention is to achieve an improved method and arrangement whereby an elevator roping can be monitored.

An object is particularly to introduce a solution where one or more aspects of an elevator roping can be monitored, such as one or more of: condition of one or more internal parts of a rope, condition of a coating of a rope, position of a rope. An object is inter alia to provide a solution by which for instance cracks, cuts or delamination of load bearing members or coating of a rope or wear of rope parts can be noticed and reacted to. An object is particularly to introduce a solution by which monitoring can be performed efficiently and continuously and/or at least in a relatively highly automatized manner.

It is brought forward a new method of monitoring an elevator roping, the roping comprising plurality of movable ropes. The roping comprises the ropes in a row adjacent each other in a width direction of the row.

The method comprises
emitting light on the ropes, in particular with one or more light sources, while they move past the one or more light sources; and
capturing with a camera system images, in particular continuously or intermittently, in particular of a zone towards which the one or more light sources emit light; and
analyzing with an analyzing system the images captured by the camera system.

Each said rope is a belt having a front side flank facing in thickness direction of the rope.

Said emitting comprises emitting on the front side flank of each of said ropes a light beam having a shape. Said shape is planar. This is advantageous, because hereby the light produces a pattern with an easily recognizable border. It also efficiently brings well visible the topography of rope(s) / rope parts, which facilitates monitoring thereof. This also facilitates extending the beam across one or more complete individual ropes while also being likely to produce an easily recognizable and analyzable pattern. The same beam intersects all the ropes.

Said analyzing comprises recognizing in the images patterns of light emitted on said ropes and analyzing one or more characteristics of the recognized patterns. Said one or more characteristics include the positions of the recognized patterns in the images and/or the positions of one or more edges of the recognized patterns in the images.

With this kind of solution one or more of the above-mentioned objects can be facilitated. The beam being shaped facilitates that the topography of said parts is simple to monitor based on the pattern recognized in the image. As part of the monitoring, characteristics of the pattern can be analyzed. Thus, it is possible to react if one or more characteristics of the pattern recognized are considered alarming, for instance.

Preferable further details of the method are introduced in the following, which further details can be combined with the method individually or in any combination.

In a preferred embodiment, said shape of the light beam is planar. Then, in particular in said emitting, one or more planar light beams of light is/are emitted on a flank of each said rope.

In a preferred embodiment, said beam has one or more planar sides or side portions. This is advantageous, because a planar side forms a visible and straight border of a pattern when the beam hits a continuous planar face. This is a simple shape to form and observe. It also efficiently brings visible the topography of rope parts, which facilitates monitoring the condition thereof. The planar side/side portions can be easily provided by shaping the light beam(s) planar.

In a preferred embodiment, said recognizing, and preferably also said analyzing one or more characteristics of the recognized patterns, is performed by an image recognition software, in particular running on a computer of the analyzing system. Said computer may be a local or remote computer, for instance.

In a preferred embodiment, the method comprises storing the captured images in a memory accessible by a computer of the analyzing system, which memory may be a cloud memory.

In a preferred embodiment, the analyzing comprises determining whether the one or more characteristics of the recognized patterns meet one or more predetermined criteria, and performing one or more predetermined actions if said one or more predetermined criteria are met, said one or more actions preferably comprising one or more of sending an alarm signal, sending a service call, stopping operation of the elevator, preventing car movement.

In a preferred embodiment, the analyzing comprises determining a momentary value for each of said one or more characteristics based on one or more images captured.

In a preferred embodiment, the analyzing, preferably said determining in particular, comprises comparing the one or more characteristics of the recognized patterns with one or more references. This may be done for example preferably by comparing a momentary value of each said characteristic with a predetermined reference value.

In a preferred embodiment, the analyzing, preferably said determining in particular, comprises comparing the recognized patterns with one or more references, such as with reference patterns. This is preferably performed by an image recognition software running on a computer of the analyzing system. The reference patterns, or reference images containing reference patterns, can be stored in a library of a memory of the computer for instance.

In a preferred embodiment, the method comprises identifying the individual rope or individual ropes and/or a manufacturing batch thereof and/or a manufacturing date thereof.

In a preferred embodiment, the method comprises reading by the analyzing system an identification marking of a rope such as an identification number or identification text or barcode or QR code or data matrix in one or more images captured.

It is also brought forward a new monitoring arrangement of an elevator roping, the roping comprising plurality of movable ropes. The roping comprises the ropes in a row adjacent each other in a width direction of the row. The monitoring arrangement comprising
one or more light sources arranged to emit light on the ropes; and
a camera system arranged to capture images, in particular continuously or intermittently, of a zone towards which the one or more light sources emit light; and
an analyzing system configured to analyze the images captured by the camera system.

Each said rope is a belt having a front side flank facing in thickness direction of the rope.

The one or more light sources are arranged to emit on the front side flank of each of said ropes a light beam having a shape.

Said shape is planar. This is advantageous, because hereby the light produces a pattern with an easily recognizable border. It also efficiently brings well visible the topography of rope(s) / rope parts, which facilitates monitoring thereof. This also facilitates extending the beam across one or more complete individual ropes while also being likely to produce an easily recognizable and analyzable pattern. The same beam intersects all the ropes.

The analyzing system is configured to recognize in the images patterns of light emitted on said ropes and to analyze one or more characteristics of the recognized patterns of light.

Said one or more characteristics include the positions of the recognized patterns in the images and/or the positions of one or more edges of the recognized patterns in the images. With this kind of solution one or more of the above-mentioned objects can be facilitated.

Preferable further details of the arrangement and method are introduced in the following, which further details can be combined with the arrangement and method individually or in any combination.

In a preferred embodiment, said beam has one or more planar sides or side portions. This is advantageous, because hereby the light produces a pattern with an easily recognizable border. It also efficiently brings well visible the topography of rope(s) / rope parts, which facilitates monitoring thereof. This also facilitates extending the beam across one or more complete individual ropes while also being likely to produce an easily recognizable and analyzable pattern.

In a preferred embodiment of the method and arrangement, the light is laser light.

In a preferred embodiment of the method and arrangement, the camera system comprises one or more cameras. Each camera is preferably in particular arranged to capture images continuously or intermittently of a zone towards which the one or more light sources emit light.

In a preferred embodiment of the method and arrangement, the analyzing system is configured to perform at least said recognizing, and preferably also said analyzing one or more characteristics of the recognized patterns, by an image recognition software, in particular running on a computer of the analyzing system.

In a preferred embodiment of the method and arrangement, the monitoring arrangement, in particular the camera system, is configured to store the captured images in a memory accessible by a computer of the analyzing system, which memory may be a cloud memory.

In a preferred embodiment of the method and arrangement, said characteristics include one or more of the following: the shapes of the recognized patterns in the images, the light intensities of the recognized patterns of light in the images.

In a preferred embodiment of the method and arrangement, the analyzing system is configured to determine whether the one or more characteristics of the recognized patterns meet one or more predetermined criteria, and to perform one or more predetermined actions if said one or more predetermined criteria are met, said one or more actions preferably comprising one or more of sending an alarm signal, sending a service call, stopping operation of the elevator, preventing car movement.

In a preferred embodiment of the method and arrangement, the one or more light sources and one or more cameras of the camera system are positioned beside the ropes, in particular such that the ropes are moveable past them during elevator operation.

In a preferred embodiment of the method and arrangement, the one or more light sources and the one or more cameras of the camera system are mounted on a stationary structure and arranged to be immovable during their operation i.e. the emitting and the capturing.

In a preferred embodiment of the method and arrangement, the one or more light sources is/are arranged to emit said one or more light beams continuously or intermittently.

In a preferred embodiment of the method and arrangement, each said rope comprises one or more load bearing members.

In a preferred embodiment of the method and arrangement, each said rope is a belt. That is, the width of the rope 3 is greater than its thickness in a transverse direction of the rope. The width/thickness ratio of the rope 3 is in the preferred embodiment greater than 2.

In a preferred embodiment of the method and arrangement, each said rope comprises one or more load bearing members embedded in a coating.

In a preferred embodiment of the method and arrangement, the aforementioned load bearing members are adjacent each other in width direction of the rope and isolated from each other by the aforementioned coating.

In a preferred embodiment of the method and arrangement, the aforementioned coating is transparent. In this case, the beam reaches well the internal components of the rope, and the pattern can be used in the analysis to identify if the internal components, such as in particular the individual load bearing members, of the rope have structural irregularities.

In a preferred embodiment of the method and arrangement, each said rope comprises one or more load bearing members made of composite material comprising reinforcing fibers, preferably carbon fibers, embedded in a matrix, which matrix comprises polymer material, such as epoxy for instance.

In a preferred embodiment of the method and arrangement, the one or more beams are emitted on the front side flanks of the ropes.

In a preferred embodiment of the method and arrangement, the rope is a belt, and each said front side flank is the wide flank of the rope, i.e. the flank facing in thickness direction of the rope.

In a preferred embodiment of the method and arrangement, a plate has been positioned on the back side of the ropes. The plate is preferably planar or concave. It may be reflective.

In a preferred embodiment of the method and arrangement, a plate has been positioned on the back side of the ropes and it is concave and arranged to reflect one or more beams b emitted from the front side of the row on the back side flank of the rope and to reflect a view of said back side flank to the camera system.

In a preferred embodiment of the method and arrangement, the one or more light sources and one or more cameras of the camera system are positioned on the same side of the aforementioned row, preferably within the width of the rope.

In a preferred embodiment of the method and arrangement, the roping is a roping of an elevator, and connected to an elevator car. The roping is preferably a suspension roping arranged to suspend the car or alternatively a compensation roping.

In a preferred embodiment, monitoring arrangement, such as the analyzing system thereof for instance, is configured to identify, the individual rope or individual ropes and/or a manufacturing batch thereof and/or a manufacturing date thereof. For this purpose, the monitoring arrangement, such as the analyzing system thereof for instance, is preferably configured to read an identification marking of a rope such as an identification number or identification text or barcode or QR code or data matrix in one or more images captured.

In a preferred embodiment, the elevator arrangement is an elevator arrangement for transporting passengers and/or goods.

### Brief description of the drawings

In the following, the present invention will be described in more detail by way of example and with reference to the attached drawings, in which
Figure 1 illustrates schematically a side view of a monitoring arrangement of an elevator roping according to a first embodiment implementing a method of monitoring an elevator roping according to an embodiment.
Figure 2 illustrates a front view of the roping of Figure 1.
Figure 3 illustrates an example of an actual image captured by the camera system of Figure 1.
Figure 4 illustrates a view in longitudinal direction of the arrangement of Figure 1 (analyzing system not shown).
Figure 5 illustrates preferred details of the camera system and the analyzing system.
Figure 6 illustrates preferred details of a rope as viewed from a front side.
Figure 7 illustrates a cross section of the rope of Figure 6.
Figure 8 illustrates preferred details of the elevator arrangement.
Figure 9 illustrates details of a monitoring arrangement according to a second embodiment.
Figure 10 illustrates details of a monitoring arrangement according to a third embodiment.
Figure 11 illustrates details of a monitoring arrangement according to a fourth embodiment.

### Detailed description

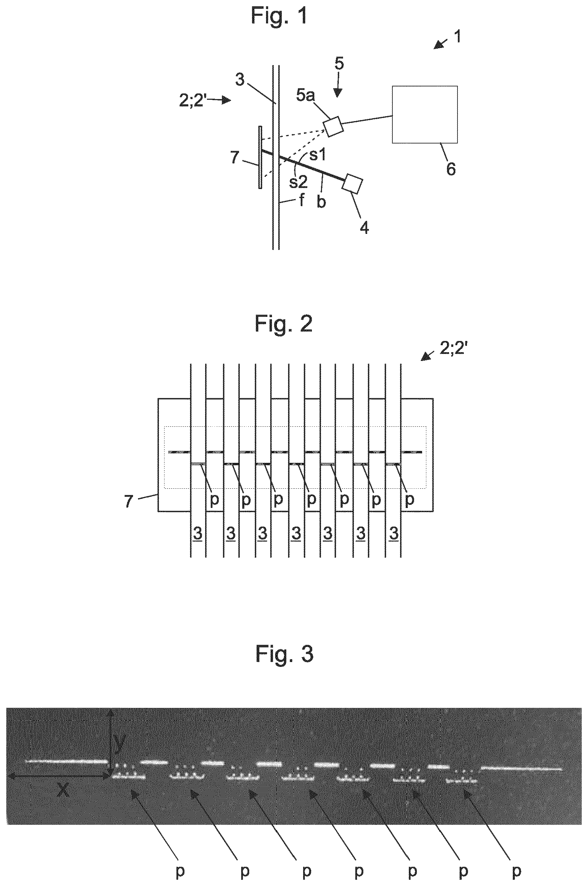

Figure 1 illustrates a monitoring arrangement 1 of an elevator roping 2;2' according to an embodiment. The arrangement 1 implements a method of monitoring an elevator roping 2;2' according to an embodiment.

The embodiment of the monitoring arrangement 1 illustrated in Figure 1 comprises a roping 2;2' comprising plurality of movable ropes 3. The roping 2;2' is preferably a roping connected to an elevator car 8. The monitoring arrangement 1 further comprises a light source 4 arranged to emit light on the ropes 3. The light source 4 is positioned beside the ropes 3, in particular such that the ropes are moveable past the light source 4. The monitoring arrangement 1 further comprises a camera system 5 arranged to capture images, in particular continuously or intermittently, of a zone towards which the light source 4 emits light; and an analyzing system 6 configured to analyze the images captured by the camera system 5. The light source 4 is arranged to emit on a flank f of each of said ropes 3 a light beam b having a shape, and the analyzing system 6 is configured to recognize in the images patterns p of light emitted on said ropes 3 and to analyze one or more characteristics of the recognized patterns p of light.

The camera system 5 comprises a camera 5a, which is arranged to capture images, preferably continuously or intermittently, of a zone towards which the light source 4 emits light.

In the embodiment of the method illustrated in Figure 1 light is emitted with the light source 4 on the ropes 3 while they move past the light source 4. The method comprises capturing with the camera system 5 images, in particular continuously or intermittently, of a zone towards which the light source 4 emits light. The method comprises analyzing with an analyzing system 6 the images captured by the camera system 5. Said emitting comprises emitting on a flank f of each of said ropes 3 a light beam b having a shape. Said analyzing comprises recognizing in the images patterns p of light emitted on said ropes 3 and analyzing one or more characteristics of the recognized patterns p.

Figure 2 illustrates the roping 2;2' as viewed from viewpoint of the camera system 5 showing schematically patterns p of light emitted on said ropes 3. Figure 3 illustrates an example of an actual image captured by the camera system 5, showing patterns p of light emitted on said ropes 3.

The beam b reflects from the parts of the rope 3 that are not fully transparent. The beam shape being known facilitates that the topography of said parts is simple to monitor based on the reflection of the beam b, which reflection is recognizable as a pattern p in the image. Characteristics of the pattern p can then be analyzed. Thus, it is possible to react if one or more characteristics of the pattern p recognized differ from reference characteristics.

In the preferred embodiment of the arrangement and method illustrated in Figure 1, said shape of the beam b is planar. Thus, in said emitting, a planar light beam b is emitted on a flank f of each said rope 3. Said beam b has opposite two planar sides s1,s2 as illustrated in Figure 1. This is advantageous, because each planar side forms a visible a straight border of a pattern when the beam b hits a continuous planar face. This is a simple shape to form and observe. It also efficiently brings visible the topography of rope parts, which facilitates monitoring thereof. Irregularities, for example discontinuities, of the shape of rope parts (intended or unintended) are easily detectable. An irregularity can also easily and logically be associated with certain kind of intended structure or unintended defect, which makes analysis of the pattern p relatively simple. Particularly, it makes it relatively simple to determine and give the analyzing system the limits which should trigger an alarm or some other predetermined action.

The analyzing the one or more characteristics of the recognized patterns p preferably comprises determining a momentary value for each of said one or more characteristics based on one or more images captured.

Said characteristics preferably include one or more of the following:
- shapes of the recognized patterns p in the images;
- dimensions of shapes of the recognized patterns p in the images, such as width and/or height;
- positions p of the recognized patterns p in the images;
- positions p of one or more edges of the recognized patterns p in the images;
- light intensities within the recognized patterns p of light in the images, such as areas or lines having low (e.g. below a limit value) light intensity within the recognized patterns p of light in the images.

The analyzing the one or more characteristics of the recognized patterns comprises determining whether the one or more characteristics of the recognized patterns p meet one or more predetermined criteria, and performing one or more predetermined actions if said one or more predetermined criteria are met. In the arrangement 1, this is implemented such that the analyzing system 6 is configured to determine whether the one or more characteristics of the recognized patterns p meet one or more predetermined criteria, and to perform one or more predetermined actions if said one or more predetermined criteria are met. Said one or more actions preferably comprising one or more of sending an alarm signal, sending a service call, stopping transport operation of the elevator arrangement, preventing car movement.

In the preferred embodiment, the analyzing, in particular the aforementioned step of determining whether the one or more characteristics of the recognized patterns p meet one or more predetermined criteria, comprises comparing the one or more characteristics of the recognized patterns p with one or more references. This is preferably performed by comparing the aforementioned momentary value of the characteristic in question with a predetermined reference value.

The comparison can be implemented such that, for example, a momentary value of a dimension (such as width and/or height) or a position of a shape of a recognized pattern is first determined by measuring and thereafter the determined momentary value is compared with a predetermined reference value. For example, position, width and/or height of a shape of the pattern p in an image can be measured e.g. by the image recognition software. The determining of a position is preferably implemented by measuring positions of one or more edges of the recognized patterns p in the images. In Figure 3, rope position is indicated by x and y.

Generally, when any of the characteristics listed, such as a dimension and/or position, shape or light intensity differs from a reference, this can be simply used as an indicator of an alarming condition to be checked.

In the preferred embodiment, the beam b intersects all the ropes 3. This simplifies the arrangement 1.

The light is preferably laser light. Thus, the beam b can be made to have accurate shape with sharp borders and consistent reflection behaviour. Thereby, the patterns p in the images will relatively reliably and accurately indicate the topography of the rope parts. Alternatively, the light could be of some other kind.

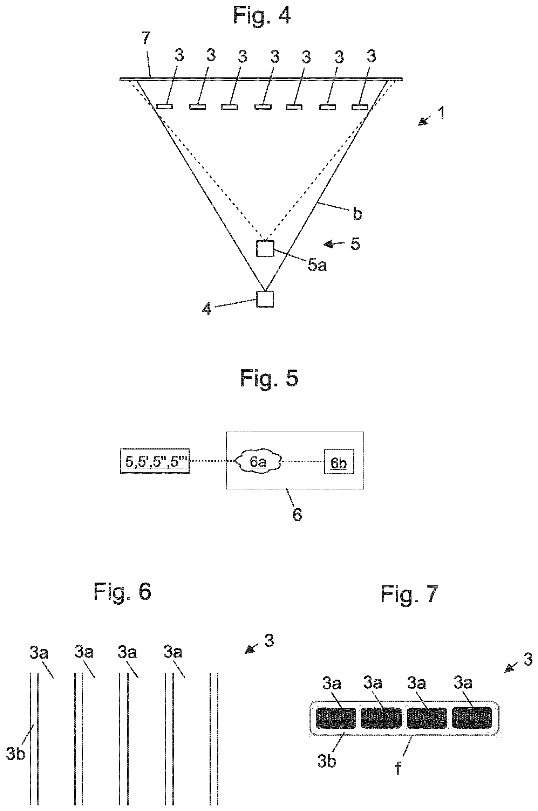

In the preferred embodiment of the method and arrangement 1, said recognizing is preferably performed / configured to be performed by an image recognition software, in particular running on a computer 6b of the analyzing system 6. This is illustrated in Figure 5. Preferably then, the method comprises storing the captured images in a memory 6a accessible by the computer 6c of the analyzing system 6. Said computer 6b may be a local or remote computer, as illustrated in Figure 5. The memory 6a is preferably, although not necessarily, a cloud memory. The computer 6b could alternatively be a part of an elevator control system, for instance.

In the preferred embodiment, each said rope 3 is a belt. That is, the width of the rope 3 is greater than its thickness in a transverse direction of the rope. The width/thickness ratio of the rope 3 is in the preferred embodiment greater than 2. In such a case, great proportion of the structure of the rope 3 can be efficiently monitored from the width directional side, i.e. by recognizing in images patterns produced by the beam on the wide flank f of the rope 3.

Figures 6 and 7 illustrate preferred structure of the rope 3. In this case, the belt 3 comprises plurality of load bearing members 3a adjacent each other in width direction of the belt 3. Each load bearing member 3a is an elongated member extending parallel with the longitudinal direction of the belt 3 as a structure that continues unbroken throughout the length of the rope 3.

The load bearing members 3a are embedded in a coating 3b. The load bearing members 3a are adjacent each other in width direction of the rope 3 and isolated from each other by the coating 3b. The coating is preferably made of material comprising polymer, such as of rubber or polyurethane or silicone. The coating 3b is preferably transparent. In this case, the beam b reaches well the internal components of the rope 3, and the pattern p can be used in the analysis to identify if the internal components, such as in particular the individual load bearing members 3a, of the rope 3 have structural irregularities.

In the preferred embodiment, the load bearing members 3a are made of composite material comprising reinforcing fibers, preferably carbon fibers, embedded in a matrix, which matrix comprises polymer material, such as epoxy for instance. This kind of composite material structure needs to be monitored, however it is relatively difficult to be done continuously. Therefore, when the load bearing members of a rope 3 are of composite material it is particularly advantageous to monitor condition of the rope 3 by analyzing the characteristics of the patterns p.

In the preferred embodiment of Figure 1, the beam b is emitted on the front side flanks f of the ropes 3. In the preferred embodiment, the rope 3 is a belt, and each said front side flank f is the wide flank of the rope 3, i.e. the flank facing in thickness direction of the rope 3. As illustrated in Figure 1, a plate 7 has been positioned on the back side of the ropes 3. There can be more than one of said plates 7. The plate 7 can have various alternative purposes. Firstly, it blocks the beam b from proceeding to surroundings, for instance. Secondly, the part of the beam b not being reflected or absorbed by the ropes 3, can be reach the plate 7 and form second patterns on the plate 7. Also these second patterns can be recognized in the images and analyzed, correspondingly as the patterns p. This can be used to obtain additional information of the rope structure 3. Thirdly, the plate 7 can be made reflective (e.g. a mirror), and arranged to reflect the beam b on the back side flank of the rope 3, as well as to reflect view of said back side flank to the camera system 5.

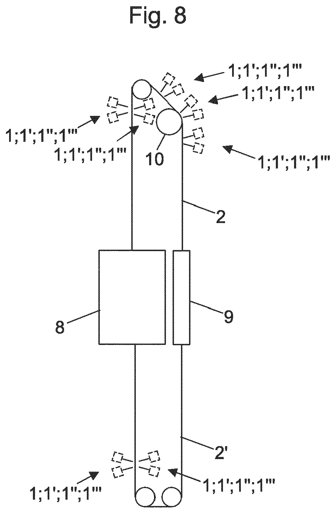

Figure 8 illustrates preferred features of an elevator arrangement comprising the roping 2;2' being monitored. The elevator arrangement comprises an elevator car 8 and a counterweight 9 interconnected by a hoisting roping 2 movable by a drive member 10, in particular a drive wheel, rotated by a motor (not shown). The elevator arrangement illustrated also comprises a compensation roping 2'. The roping 2 and/or the roping 2' can be monitored by the method and/or monitoring arrangement as described anywhere in this application. Figure 8 also illustrates alternative positions for the monitoring arrangement 1. The roping(s) can be simultaneously monitored from plurality of said positions.

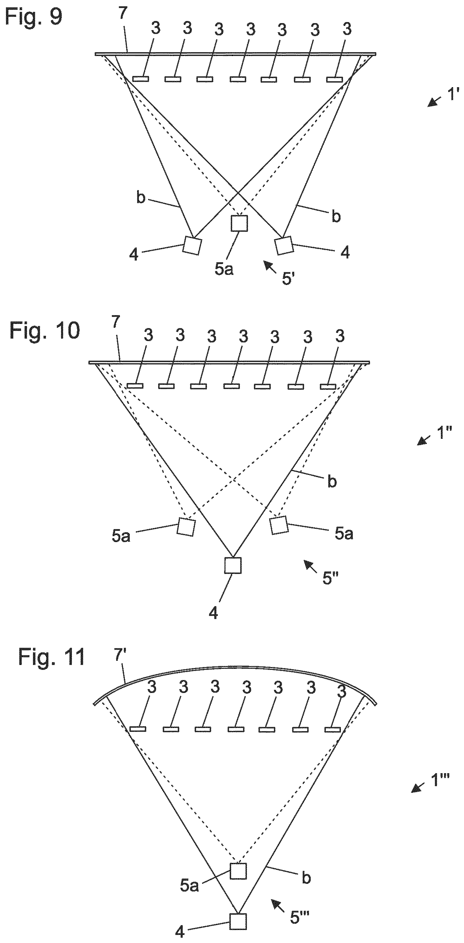

Figure 9 illustrates a monitoring arrangement 1' of an elevator roping 2;2' according to a second embodiment, which arrangement 1' implements the earlier described method for monitoring an elevator roping 2;2' according to an embodiment (analyzing system 6 not shown). This embodiment is different only in that there are plurality, in particular two, of the light sources 4 emitting light on the ropes 3 while they move past the light sources 4.

Figure 10 illustrates a monitoring arrangement 1" of an elevator roping 2;2' according to a third embodiment, which arrangement 1" implements the earlier described method of monitoring an elevator roping 2;2' according to an embodiment (analyzing system 6 not shown). This embodiment is different only in that there are plurality, in particular two, of cameras 5a comprised in the camera system 5'.

Figure 11 illustrates a monitoring arrangement 1‴ of an elevator roping 2;2' according to a fourth embodiment, which arrangement 1‴ implements the earlier described method for monitoring an elevator roping 2;2' according to an embodiment (analyzing system 6 not shown). This embodiment is different from that presented in Figure 4 only in that the plate 7' positioned on the back side of the ropes 3 is concave and arranged to reflect a beam b emitted from the front side of the row on the back side flanks of the ropes 3 as well as to reflect view of said back side flank to the camera system 5"'. Thus, the arrangement 1‴ can monitor the ropes 3 from both sides with small amount of components.

In general, the rope 3 can have as structure as disclosed more specifically in document WO2009090299 A1.

In general, the rope 3, when being a belt, can be flat sided, or have a polyvee structure or some other surface contour such as teeth for instance.

In general, it is preferred that the one or more cameras 5a of the camera system 5 are mounted on a stationary structure and arranged to be immovable during their operation i.e. the emitting and the capturing.

In general, it is preferred that the one or more light sources 4 is/are arranged to emit said one or more light beams b continuously or intermittently (e.g. in the form of strobes or flashes).

In general, the one or more light sources 4 and one or more cameras 5a of the camera system 5 are positioned beside the ropes 3, in particular such that the ropes 3 are moveable past them during operation of the elevator arrangement. The one or more light sources 4 and one or more cameras 5a of the camera system 5 are then positioned in close proximity of the ropes 3, preferably in particular such that the path of the beam b from each light source 4 to a rope 3 is less than 1 meters, and the path of the reflection of the beam b from said rope 3 to a camera 5a of the camera system is also less than 1 meters.

In general, the roping 2;2' preferably comprises the ropes 3 in a row adjacent each other in a width direction of the row, as illustrated in the Figures. In general, the one or more light sources 4 and one or more cameras 5a of the camera system 5 are preferably positioned on the same side of the row (front side in Figures), preferably within the width of the row (as seen viewed in orthogonal direction to the width direction of the row), whereby the angle in which they can light/view the wide side of the row need not be very far from orthogonal.

In general, the camera system 5 and/or the analyzing system 6 can be made to be part of an elevator control system of the elevator arrangement.

In general, the method (and arrangement 1,1',1",1"') can additionally, although not necessarily, further comprise identifying (or be configured therefor respectively) the individual rope(s) and/or a manufacturing batch thereof and/or a manufacturing date thereof. Then, each rope 3 of the roping 2;2' is preferably provided with an identification means, such as an identification tag or identification marking. The identification marking may be an identification number or identification text or barcode or QR code or data matrix printed on the rope, for example or any other suitable readable identification means containing identification information. The identifying can be performed by aid of the camera system 5 or alternatively with a separate camera system. The identifying preferably comprises reading by the analyzing system 6 an identification marking of a rope 3 such as an identification number or identification text or barcode or QR code or data matrix in one or more images captured. The identifying facilitates associating the results of the analysis with the rope identification data and taking individual aspects of the individual ropes, such as the history thereof for example, into account in the monitoring and in the actions to be triggered. Likewise, other additional, but optional, aspects could be monitored in the method or arrangement 1,1',1",1‴ by aid of the camera system 5 or alternatively with a separate camera system. Such optional aspects include for instance dirt on the rope(s), dirt or rust or oil on a rope wheel, vibration of rope(s), lateral position of rope(s). The optional aspects include also measuring colors of the coating 3b of the ropes. As the rope becomes older, the coating turns gradually from colorless to yellow. By monitoring the colors, aging of the coating 3b can be monitored.

Generally, the image recognition software running on a computer 6b of the analyzing system 6 can utilize machine learning and/or sophisticated algorithms for the recognizing in the images patterns p of light emitted on said ropes 3 and for the analyzing one or more characteristics of the recognized patterns p. In this case, the analyzing one or more characteristics of the recognized patterns p may comprise comparing by the software the recognized patterns p with references, such as with reference patterns. The reference patterns, or reference images containing reference patterns, can be stored in a library of a memory of the computer 6b for instance. The library can then include a large amount of reference patterns, or reference images containing reference patterns, each having a characteristic to be searched from the captured images by the software. These characteristics to be searched are preferably characteristics that are considered alarming, such as characteristics present when the rope(s) have defects, such as cracks, cuts or when the rope(s) or part(s) thereof have an unintended position.

Generally, to localize rope defects, the method preferably comprises storing a position data associated with the images captured and/or with images captured where the recognized patterns (p) do not meet one or more predetermined criteria. Thus, locating of an alarming part of the rope 3 can be facilitated in later inspection by a service person for instance. The position data can comprise car, for instance, when the defect is at the camera location.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A method of monitoring an elevator roping (2;2'), the roping (2;2') comprising plurality of movable ropes (3), the roping (2;2') comprising the ropes (3) in a row adjacent each other in a width direction of the row, the method comprising
emitting light, in particular with one or more light sources (4) on the ropes (3) while they move past the one or more light sources (4); and
capturing with a camera system (5;5';5";5"') images, in particular of a zone towards which the one or more light sources (4) emit light; and
analyzing with an analyzing system (6) the images captured by the camera system (5;5';5";5"'),
**characterized in that** each said rope (3) is a belt having a front side flank (f) facing in thickness direction of the rope (3), and said emitting comprises emitting on the front side flank (f) of each of said ropes (3) a light beam (b) having a planar shape, the same beam (b) intersecting all the ropes (3), and said analyzing comprises recognizing in the images patterns (p) of light emitted on said ropes (3) and analyzing one or more characteristics of the recognized patterns (p), wherein said one or more characteristics include the positions of the recognized patterns (p) in the images and/or the positions of one or more edges of the recognized patterns (p) in the images.

2. A method as defined in claim 1, wherein said beam (b) has one or more planar sides (s1,s2) or side portions.

3. A method as defined in any of the preceding claims, wherein said recognizing is performed by an image recognition software, in particular running on a computer (6b) of the analyzing system (6).

4. A method as defined in any of the preceding claims, wherein the analyzing one or more characteristics of the recognized patterns (p) comprises determining whether the one or more characteristics of the recognized patterns (p) meet one or more predetermined criteria, and the method comprises performing one or more predetermined actions if said one or more predetermined criteria are met, said one or more actions preferably comprising one or more of sending an alarm signal, sending a service call, stopping transport operation of the elevator arrangement, preventing car movement.

5. A method as defined in any of the preceding claims, wherein the analyzing one or more characteristics of the recognized patterns (p), preferably said determining whether the one or more characteristics of the recognized patterns (p) meet one or more predetermined criteria as defined in claim 4 in particular, comprises comparing the one or more characteristics of the recognized patterns (p) with one or more references.

6. A method as defined in any of the preceding claims, wherein the analyzing comprises determining a momentary value for each of said one or more characteristics based on one or more images captured, and said determining whether the one or more characteristics of the recognized patterns (p) meet one or more predetermined criteria comprises comparing the aforementioned momentary value of the characteristic in question with a predetermined reference value.

7. A method as defined in any of the preceding claims, wherein the method comprises identifying the individual rope (3) or individual ropes (3) and/or a manufacturing batch thereof and/or a manufacturing date thereof.

8. A method as defined in any of the preceding claims, wherein the method comprises reading by the analyzing system (6) an identification marking of a rope (3) such as an identification number or identification text or barcode or QR code or data matrix in one or more images captured.

9. A monitoring arrangement (1;1';1";1"') of an elevator roping (2;2'), the roping (2;2') comprising plurality of movable ropes (3), the roping (2;2') comprising the ropes (3) in a row adjacent each other in a width direction of the row, the monitoring arrangement (1;1';1";1"') comprising
one or more light sources (4) arranged to emit light on the ropes (3); and
a camera system (5;5';5";5‴) arranged to capture images of a zone towards which the one or more light sources (4) emit light; and
an analyzing system (6) configured to analyze the images captured by the camera system (5;5';5";5‴),
**characterized in that** each said rope (3) is a belt having front side flank (f) facing in thickness direction of the rope (3), and the one or more light sources (4) are arranged to emit on the front side flank (f) of each of said ropes (3) a light beam (b) having a planar shape, the same beam (b) intersecting all the ropes (3), and the analyzing system (6) is configured to recognize in the images patterns (p) of light emitted on said ropes (3) and to analyze one or more characteristics of the recognized patterns (p) of light, wherein said one or more characteristics include the positions of the recognized patterns (p) in the images and/or the positions of one or more edges of the recognized patterns (p) in the images.

10. A monitoring arrangement (1;1';1";1‴) as defined in claim 9, wherein said beam (b) has one or more planar sides (s1,s2) or side portions.

11. A monitoring arrangement (1;1';1";1"') as defined in any of the preceding claims 9-10 or a method as defined in any of the preceding claims 1-8, wherein the light is laser light.

12. A monitoring arrangement (1;1';1";1‴) as defined in any of the preceding claims 9-11 or a method as defined in any of the preceding claims 1-8, wherein the camera system (5;5';5";5"') comprises one or more cameras (5a).

13. A monitoring arrangement (1;1';1";1"') as defined in any of the preceding claims 9-12, wherein the analyzing system (6) is configured to perform said recognizing by an image recognition software, in particular running on a computer (6b) of the analyzing system (6).

14. A monitoring arrangement (1;1';1";1"') as defined in any of the preceding claims 9-13 or a method as defined in any of the preceding claims 1-8, wherein said characteristics include one or more of the following: the shapes of the recognized patterns (p) in the images, the light intensities of the recognized patterns of light in the images.

15. A monitoring arrangement (1;1';1";1"') as defined in any of the preceding claims 9-14 or a method as defined in any of the preceding claims 1-8, wherein the analyzing system (6) is configured to determine whether the one or more characteristics of the recognized patterns (p) meet one or more predetermined criteria, and to perform one or more predetermined actions if said one or more predetermined criteria are met, said one or more actions preferably comprising one or more of sending an alarm signal, sending a service call, stopping transport operation of the elevator arrangement, preventing car movement or the elevator in question.

16. A monitoring arrangement (1;1';1";1"') as defined in any of the preceding claims 9-15 or a method as defined in any of the preceding claims 1-8, wherein each said rope (3) comprises one or more load bearing members (3a) embedded in a coating (3b), the coating (3b) preferably being transparent.

17. A monitoring arrangement (1;1';1";1"') as defined in any of the preceding claims 9-16 or a method as defined in any of the preceding claims 1-8, wherein each said rope (3) comprises one or more load bearing members (3a) made of composite material comprising reinforcing fibers, preferably carbon fibers, embedded in a matrix, which matrix comprises polymer material, such as epoxy for instance.

## Patentansprüche

1. Verfahren zur Überwachung eines Aufzugsseilwerks (2; 2'), wobei das Seilwerk (2; 2') mehrere bewegliche Seile (3) umfasst, wobei das Seilwerk (2; 2') die Seile (3) in einer Reihe nebeneinander in einer Breitenrichtung der Reihe umfasst, wobei das Verfahren umfasst:
Emittieren von Licht, insbesondere mit einer oder mehreren Lichtquellen (4) auf die Seile (3), während sie sich an der einen oder den mehreren Lichtquellen (4) vorbei bewegen; und
Aufnehmen von Bildern, insbesondere einer Zone, zu der die eine oder die mehreren Lichtquellen (4) Licht emittieren, mit einem Kamerasystem (5; 5'; 5''; 5‴); und
Analysieren der von dem Kamerasystem (5; 5'; 5''; 5''') aufgenommenen Bilder mit einem Analysesystem (6),
**dadurch gekennzeichnet, dass** das Seil (3) ein Gurt mit einer Vorderseitenflanke (f) ist, die in eine Dickenrichtung des Seils (3) weist, und das Emittieren ein Emittieren eines Lichtstrahls (b) mit einer planaren Form auf die Vorderseitenflanke (f) jedes der Seile (3) umfasst, wobei derselbe Strahl (b) alle der Seile (3) schneidet, und das Analysieren ein Erkennen von Mustern (p) von auf die Seile (3) emittiertem Licht in den Bildern und ein Analysieren eines oder mehrerer Charakteristika der erkannten Muster (p) umfasst, wobei das eine oder die mehreren Charakteristika die Positionen der erkannten Muster (p) in den Bildern und/oder die Positionen eines oder mehrerer Ränder der erkannten Muster (p) in den Bildern beinhalten.

2. Verfahren nach Anspruch 1, wobei der Strahl (b) eine oder mehrere planare Seiten (s1, s2) oder Seitenabschnitte aufweist.

3. Verfahren nach einem der vorhergehenden Ansprüche, wobei das Erkennen durch eine Bilderkennungssoftware durchgeführt wird, die insbesondere auf einem Computer (6b) des Analysesystems (6) läuft.

4. Verfahren nach einem der vorhergehenden Ansprüche, wobei das Analysieren eines oder mehrerer Charakteristika der erkannten Muster (p) ein Bestimmen umfasst, ob das eine oder die mehreren Charakteristika der erkannten Muster (p) ein oder mehrere vorbestimmte Kriterien erfüllen, und das Verfahren ein Durchführen einer oder mehrerer vorbestimmter Aktionen umfasst, wenn das eine oder die mehreren vorbestimmten Kriterien erfüllt sind, wobei die eine oder die mehreren Aktionen vorzugsweise eines oder mehrere von einem Senden eines Alarmsignals, Senden eines Dienstaufrufs, Stoppen einer Transportoperation der Aufzugsanordnung, Verhindern einer Kabinenbewegung umfassen.

5. Verfahren nach einem der vorhergehenden Ansprüche, wobei das Analysieren eines oder mehrerer Charakteristika der erkannten Muster (p), vorzugsweise das Bestimmen, ob das eine oder die mehreren Charakteristika der erkannten Muster (p) ein oder mehrere vorbestimmte Kriterien erfüllen, insbesondere nach Anspruch 4, ein Vergleichen des einen oder der mehreren Charakteristika der erkannten Muster (p) mit einer oder mehreren Referenzen umfasst.

6. Verfahren nach einem der vorhergehenden Ansprüche, wobei das Analysieren ein Bestimmen eines Momentanwerts für jedes des einen oder der mehreren Charakteristika auf der Basis eines oder mehrerer aufgenommener Bilder umfasst und das Bestimmen, ob das eine oder die mehreren Charakteristika der erkannten Muster (p) ein oder mehrere vorbestimmte Kriterien erfüllen, ein Vergleichen des oben erwähnten Momentanwerts des betreffenden Charakteristikums mit einem vorbestimmten Referenzwert umfasst.

7. Verfahren nach einem der vorhergehenden Ansprüche, wobei das Verfahren ein Identifizieren des einzelnen Seils (3) oder der einzelnen Seile (3) und/oder einer Fertigungscharge davon und/oder eines Fertigungsdatums davon umfasst.

8. Verfahren nach einem der vorhergehenden Ansprüche, wobei das Verfahren ein Lesen einer Identifikationsmarkierung eines Seils (3), wie einer Identifikationsnummer oder eines Identifikationstextes oder eines Strichcodes oder eines QR-Codes oder einer Datenmatrix, in einem oder mehreren aufgenommenen Bildern durch das Analysesystem (6) umfasst.

9. Überwachungsanordnung (1; 1'; 1"; 1‴) eines Aufzugsseilwerks (2; 2'), wobei das Seilwerk (2; 2') mehrere bewegliche Seile (3) umfasst, wobei das Seilwerk (2; 2') die Seile (3) in einer Reihe nebeneinander in einer Breitenrichtung der Reihe umfasst, wobei die Überwachungsanordnung (1; 1'; 1"; 1‴) umfasst:
eine oder mehrere Lichtquellen (4), die dazu eingerichtet sind, Licht auf die Seile (3) zu emittieren; und
ein Kamerasystem (5; 5'; 5''; 5‴), das dazu eingerichtet ist, Bilder einer Zone aufzunehmen, zu der die eine oder die mehreren Lichtquellen (4) Licht emittieren; und
ein Analysesystem (6), das dazu konfiguriert ist, die von dem Kamerasystem (5; 5'; 5''; 5‴) aufgenommenen Bilder zu analysieren,
**dadurch gekennzeichnet, dass** das Seil (3) ein Gurt mit einer Vorderseitenflanke (f) ist, die in eine Dickenrichtung des Seils (3) weist, und die eine oder die mehreren Lichtquellen (4) dazu eingerichtet sind, einen Lichtstrahl (b) mit einer planaren Form auf die Vorderseitenflanke (f) jedes der Seile (3) zu emittieren, wobei derselbe Strahl (b) alle der Seile (3) schneidet, und das Analysesystem (6) dazu konfiguriert ist, Muster (p) von auf die Seile (3) emittiertem Licht in den Bildern zu erkennen und ein oder mehrere Charakteristika der erkannten Muster (p) von Licht zu analysieren, wobei das eine oder die mehreren Charakteristika die Positionen der erkannten Muster (p) in den Bildern und/oder die Positionen eines oder mehrerer Ränder der erkannten Muster (p) in den Bildern beinhalten.

10. Überwachungsanordnung (1; 1'; 1''; 1‴) nach Anspruch 9, wobei der Strahl (b) eine oder mehrere planare Seiten (s1, s2) oder Seitenabschnitte aufweist.

11. Überwachungsanordnung (1; 1'; 1''; 1‴) nach einem der vorhergehenden Ansprüche 9-10 oder Verfahren nach einem der vorhergehenden Ansprüche 1-8, wobei das Licht Laserlicht ist.

12. Überwachungsanordnung (1; 1'; 1''; 1‴) nach einem der vorhergehenden Ansprüche 9-11 oder Verfahren nach einem der vorhergehenden Ansprüche 1-8, wobei das Kamerasystem (5; 5'; 5''; 5‴) eine oder mehrere Kameras (5a) umfasst.

13. Überwachungsanordnung (1; 1'; 1''; 1‴) nach einem der vorhergehenden Ansprüche 9-12, wobei das Analysesystem (6) dazu konfiguriert ist, das Erkennen durch eine Bilderkennungssoftware durchzuführen, die insbesondere auf einem Computer (6b) des Analysesystems (6) läuft.

14. Überwachungsanordnung (1; 1'; 1''; 1‴) nach einem der vorhergehenden Ansprüche 9-13 oder Verfahren nach einem der vorhergehenden Ansprüche 1-8, wobei die Charakteristika eines oder mehrere der folgenden beinhalten: die Formen der erkannten Muster (p) in den Bildern, die Lichtintensitäten der erkannten Muster von Licht in den Bildern.

15. Überwachungsanordnung (1; 1'; 1''; 1‴) nach einem der vorhergehenden Ansprüche 9-14 oder Verfahren nach einem der vorhergehenden Ansprüche 1-8, wobei das Analysesystem (6) dazu konfiguriert ist, zu bestimmen, ob das eine oder die mehreren Charakteristika der erkannten Muster (p) ein oder mehrere vorbestimmte Kriterien erfüllen, und eine oder mehrere vorbestimmte Aktionen durchzuführen, wenn das eine oder die mehreren vorbestimmten Kriterien erfüllt sind, wobei die eine oder die mehreren Aktionen vorzugsweise eines oder mehrere von einem Senden eines Alarmsignals, Senden eines Dienstaufrufs, Stoppen einer Transportoperation der Aufzugsanordnung, Verhindern einer Kabinenbewegung oder des betreffenden Aufzugs umfassen.

16. Überwachungsanordnung (1; 1'; 1''; 1‴) nach einem der vorhergehenden Ansprüche 9-15 oder Verfahren nach einem der vorhergehenden Ansprüche 1-8, wobei jedes der Seile (3) ein oder mehrere lasttragende Elemente (3a) umfasst, die in eine Beschichtung (3b) eingebettet sind, wobei die Beschichtung (3b) vorzugsweise transparent ist.

17. Überwachungsanordnung (1; 1'; 1''; 1‴) nach einem der vorhergehenden Ansprüche 9-16 oder Verfahren nach einem der vorhergehenden Ansprüche 1-8, wobei jedes der Seile (3) ein oder mehrere lasttragende Elemente (3a) umfasst, die aus einem Verbundstoff hergestellt sind, das Verstärkungsfasern, vorzugsweise Kohlefasern umfasst, die in eine Matrix eingebettet sind, wobei diese Matrix ein Polymermaterial umfasst, wie beispielsweise Epoxid.

## Revendications

1. Procédé de surveillance d'un câblage d'ascenseur (2 ; 2'), le câblage (2 ; 2') comprenant une pluralité de câbles mobiles (3), le câblage (2 ; 2') comprenant les câbles (3) adjacents dans une rangée en direction de la largeur de la rangée, le procédé comprenant
l'émission de lumière, en particulier au moyen d'une ou plusieurs sources lumineuses (4), sur les câbles (3) alors qu'ils se déplacent devant lesdites une ou plusieurs sources lumineuses (4) ; et
la capture d'images à l'aide d'un système de caméra (5 ; 5' ; 5" ; 5‴), en particulier d'une zone vers laquelle lesdites une ou plusieurs sources lumineuses (4) émettent de la lumière ; et
l'analyse des images capturées par le système de caméra (5 ; 5' ; 5''; 5''') à l'aide d'un système d'analyse (6),
**caractérisé en ce que** chaque dit câble (3) est une courroie ayant un flanc avant (f) orienté en direction de l'épaisseur du câble (3), et ladite émission comprend l'émission sur le flanc avant (f) de chacun desdits câbles (3) d'un faisceau lumineux (b) de forme plane, le même faisceau (b) intersectant tous les câbles (3), et ladite analyse comprend la reconnaissance, dans les motifs d'image (p) de la lumière émise sur lesdits câbles (3), d'une ou plusieurs caractéristiques des motifs reconnus (p) et l'analyse de celles-ci, dans lequel lesdites une ou plusieurs caractéristiques incluent les positions des motifs reconnus (p) dans les images et/ou les positions d'un ou plusieurs bords des motifs reconnus (p) dans les images.

2. Procédé selon la revendication 1, dans lequel ledit faisceau (b) comporte un ou plusieurs côtés plans (s1, s2) ou portions latérales.

3. Procédé selon l'une quelconque des revendications précédentes, dans lequel ladite reconnaissance est effectuée par un logiciel de reconnaissance d'images, en particulier un logiciel exécuté par un ordinateur (6b) du système d'analyse (6).

4. Procédé selon l'une quelconque des revendications précédentes, dans lequel l'analyse d'une ou plusieurs caractéristiques des modèles reconnus (p) comprend la détermination du fait que lesdites une ou plusieurs caractéristiques des motifs reconnus (p) satisfont ou non à un ou plusieurs critères prédéterminés, et le procédé comprend la mise en œuvre d'une ou plusieurs actions prédéterminées si lesdits un ou plusieurs critères prédéterminés sont satisfaits, lesdites une ou plusieurs actions comprenant de préférence une ou plusieurs actions parmi l'envoi d'un signal d'alarme, l'envoi d'un appel de service, l'arrêt de l'opération de transport de l'agencement d'ascenseur, et l'empêchement du déplacement de la cabine.

5. Procédé selon l'une quelconque des revendications précédentes, dans lequel l'analyse d'une ou plusieurs caractéristiques des motifs reconnus (p), de préférence ladite détermination du fait qu'une ou plusieurs caractéristiques des motifs reconnus (p) satisfont ou non à un ou plusieurs critères prédéterminés selon la revendication 4 en particulier, comprend la comparaison desdites une ou plusieurs caractéristiques des motifs reconnus (p) à une ou plusieurs références.

6. Procédé selon l'une quelconque des revendications précédentes, dans lequel l'analyse comprend la détermination d'une valeur momentanée pour chacune desdites une ou plusieurs caractéristiques sur la base d'une ou de plusieurs images capturées, et ladite détermination du fait que lesdites une ou plusieurs caractéristiques des motifs reconnus (p) satisfont ou non à un ou plusieurs critères prédéterminés comprend la comparaison de la valeur momentanée précitée de la caractéristique en question à une valeur de référence prédéterminée.

7. Procédé selon l'une quelconque des revendications précédentes, dans lequel le procédé comprend l'identification du câble individuel (3) ou des câbles individuels (3), et/ou d'un lot de fabrication de ceux-ci, et/ou d'une date de fabrication de ceux-ci.

8. Procédé selon l'une quelconque des revendications précédentes, dans lequel le procédé comprend la lecture par le système d'analyse (6) d'un marquage d'identification d'un câble (3), tel qu'un numéro d'identification, un texte d'identification, un code-barres, un code QR ou une matrice de données, dans une ou plusieurs images capturées.

9. Agencement de surveillance (1 ; 1' ; 1" ; 1‴) d'un câblage d'ascenseur (2 ; 2'), le câblage (2 ; 2') comprenant une pluralité de câbles mobiles (3), le câblage (2 ; 2') comprenant les câbles (3) adjacents dans une rangée en direction de la largeur de la rangée, l'agencement de surveillance (1 ; 1'; 1"; 1‴) comprenant
une ou plusieurs sources lumineuses (4) agencées de manière à émettre de la lumière sur les câbles (3) ; et
un système de caméra (5 ; 5' ; 5"; 5‴) agencé pour capturer des images d'une zone vers laquelle lesdites une ou plusieurs sources lumineuses (4) émettent de la lumière ; et
un système d'analyse (6) configuré pour analyser les images capturées par le système de caméra (5 ; 5' ; 5"; 5‴),
**caractérisé en ce que** chaque dit câble (3) est une courroie ayant un flanc avant (f) orienté en direction de l'épaisseur du câble (3), et lesdites une ou plusieurs sources lumineuses (4) sont agencées de manière à émettre sur le flanc avant (f) de chacun desdits câbles (3) un faisceau lumineux (b) de forme plane, le même faisceau (b) intersectant tous les câbles (3), et **en ce que** le système d'analyse (6) est configuré pour reconnaître, dans les motifs d'image (p) de la lumière émise sur lesdits câbles (3), une ou plusieurs caractéristiques des motifs de lumière reconnus (p) et pour analyser celles-ci, dans lequel lesdites une ou plusieurs caractéristiques incluent les positions des motifs reconnus (p) dans les images et/ou les positions d'un ou plusieurs bords des motifs reconnus (p) dans les images.

10. Agencement de surveillance (1 ; 1' ; 1"; 1‴) selon la revendication 9, dans lequel ledit faisceau (b) comporte un ou plusieurs côtés plans (s1, s2) ou portions latérales.

11. Agencement de surveillance (1 ; 1' ; 1" ; 1‴) selon l'une quelconque des revendications précédentes 9 et 10, ou procédé selon l'une quelconque des revendications précédentes 1 à 8, dans lequel la lumière est une lumière laser.

12. Agencement de surveillance (1 ; 1' ; 1" ; 1‴) selon l'une quelconque des revendications précédentes 9 à 11, ou procédé selon l'une quelconque des revendications précédentes 1 à 8, dans lequel le système de caméra (5 ; 5' ; 5" ; 5‴) comprend une ou plusieurs caméras (5a).

13. Agencement de surveillance (1 ; 1' ; 1" ; 1‴) selon l'une quelconque des revendications précédentes 9 à 12, dans lequel le système d'analyse (6) est configuré pour mettre en œuvre ladite reconnaissance par un logiciel de reconnaissance d'images, en particulier exécuté sur un ordinateur (6b) du système d'analyse (6).

14. Agencement de surveillance (1 ; 1' ; 1" ; 1‴) selon l'une quelconque des revendications précédentes 9 à 13, ou procédé selon l'une quelconque des revendications précédentes 1 à 8, dans lequel lesdites caractéristiques incluent une ou plusieurs des caractéristiques suivantes : les formes des motifs (p) reconnus dans les images, et les intensités lumineuses des motifs lumineux reconnus dans les images.

15. Agencement de surveillance (1 ; 1' ; 1" ; 1‴) selon l'une quelconque des revendications précédentes 9 à 14, ou procédé selon l'une quelconque des revendications précédentes 1 à 8, dans lequel le système d'analyse (6) est configuré pour déterminer si lesdites une ou plusieurs caractéristiques des motifs reconnus (p) satisfont ou non à un ou plusieurs critères prédéterminés, et pour mettre en œuvre une ou plusieurs actions prédéterminées si lesdits un ou plusieurs critères prédéterminés sont satisfaits, lesdites une ou plusieurs actions comprenant de préférence une ou plusieurs actions parmi l'envoi d'un signal d'alarme, l'envoi d'un appel de service, l'arrêt de l'opération de transport de l'agencement d'ascenseur, et l'empêchement du déplacement de la cabine ou de l'ascenseur en question.

16. Agencement de surveillance (1 ; 1' ; 1" ; 1‴) selon l'une quelconque des revendications précédentes 9 à 15, ou procédé selon l'une quelconque des revendications précédentes 1 à 8, dans lequel chaque câble (3) comprend un ou plusieurs éléments porteurs de charge (3a) intégrés dans un revêtement (3b), le revêtement (3b) étant de préférence transparent.

17. Agencement de surveillance (1 ; 1' ; 1" ; 1‴) selon l'une quelconque des revendications précédentes 9 à 16, ou procédé selon l'une quelconque des revendications précédentes 1 à 8, dans lequel chaque câble (3) comprend un ou plusieurs éléments porteurs de charge (3a) constitués en un matériau composite comprenant des fibres de renfort, de préférence des fibres de carbone, incorporées dans une matrice, ladite matrice comprenant un matériau polymère, tel qu'un époxyde par exemple.
